(19) Europäisches Patentamt
European Patent Office
Office européen des brevets

(11) **EP 4 406 736 A1**

(12) **EUROPEAN PATENT APPLICATION**

(43) Date of publication:
**31.07.2024 Bulletin 2024/31**

(21) Application number: **23153338.1**

(22) Date of filing: **25.01.2023**

(51) International Patent Classification (IPC):
**B32B 27/08** (2006.01)   **B32B 1/08** (2006.01)
**B32B 7/12** (2006.01)   **B32B 27/32** (2006.01)
**B65D 65/40** (2006.01)

(52) Cooperative Patent Classification (CPC):
**B32B 27/32; B32B 1/08; B32B 7/12; B32B 27/08;**
**B65D 65/40;** B32B 2250/242; B32B 2255/10;
B32B 2255/205; B32B 2307/30; B32B 2307/514;
B32B 2307/72; B32B 2307/7376; B32B 2439/00;
B32B 2439/02; B32B 2439/40;   (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **ALBEA SERVICES**
**92230 Gennevilliers (FR)**

(72) Inventor: **MUTHA, Nitin**
**51100 Reims (FR)**

(74) Representative: **Gevers & Orès**
**Immeuble le Palatin 2**
**3 Cours du Triangle**
**CS 80165**
**92939 Paris La Défense Cedex (FR)**

(54) **FLEXIBLE TUBE CONTAINER**

(57)    A flexible tube container (1) comprising a tube head (10) and a skirt (100) formed from a laminated material, the laminated material comprising an inner layer made of PE, an outer layer made of PE and an barrier layer comprising an aluminum oxide (AlOx) material barrier and a carrier layer made of polyolefin coated by said oxide material barrier, the laminated material having a total melt flow index between 0.5 and 1.6 g/10 min at 190°C and 2.16 kg according to the ASTM D1238 measurement.

[Fig.3]

EP 4 406 736 A1

(52) Cooperative Patent Classification (CPC): (Cont.)
B32B 2597/00

**Description**

The invention relates to a flexible tube container, also call squeezable tube container formed from a laminated material. Said tubes are designed to store and distribute liquid to pasty products.

Nowadays, the worldwide plastic production represents one of the biggest waste sources. The recycling of these plastic products is a major concern for national and regional organizations. The non-recycled plastic materials are currently disposed of by a variety of processes from landfill disposal to energy recovery through thermal and chemical treatments.

In the case of cosmetic packaging industry, laminated materials comprising several layers are widely used as they represent advantages in terms of product protection and mechanical properties.

Especially, an aluminum barrier layer is usually used to improve impermeability. Such aluminum layer is firmly bonded to layers of plastic materials. This presents a problem for recycling the laminated materials, as the plastic materials and aluminum cannot be easily separated and sorted into separate recycling channels.

The applicant has hence handled deep studies to replace the aluminum barrier layer by another barrier layer responding to the recycling and the permeability requirements. Oxide materials, such as Aluminum (AlOx) and silicon (SiOx) oxide materials, have been found to be promising barrier materials compatible with recycling issues. Such a barrier layer comprises a thin oxide material barrier coated on a polymer carrier layer, especially polyolefin.

However, the barrier properties of the AlOx and SiOx are not as satisfactory as for the aluminum. Thus, there is still a need for an improved laminated material comprising a AlOx or SiOx based barrier layer.

The use of a plurality of different polymer in the same laminated material may be limited by the recycling requirements. Indeed, plastic materials are often incompatible with one another. This means that the recycling of incompatible mixed materials leads to a recycled material with degraded properties, which will no longer respond to noble applications with high added value. It is recommended within a same device to use compatible plastic materials because the properties of recycled plastics drop rapidly if they are contaminated with incompatible plastics.

In the case of an obligation to use incompatible plastics in the same part, it is today seen as necessary to ensure that these materials can be separated easily during a dismantling phase or can be separated by physico-mechanical sorting after the grinding phase of the part when comes the time to recycle the products made thereof.

The present invention attempts to solve at least one of the above mentioned problems and propose a flexible tube container comprising a tube head and a skirt formed from a recyclable laminated material, the laminated material comprising an inner layer made of PE, an outer layer made of PE and an barrier layer comprising an aluminum oxide (AlOx) material barrier and a carrier layer made of polyolefin coated by said oxide material barrier, the laminated material having a total melt flow index between 0.5 and 1.6 g/10 min at 190°C and 2.16 kg according to the ASTM D1238 measurement.

Such a melt flow index (MFI) makes it possible to ensure that the laminated material, and more advantageously the flexible tube container, will be able to be remelted into a material which can be reused. In other words, it makes it possible to ensure that the laminated material, and more advantageously the flexible tube container are recyclable.

Indeed, for melt flow index values outside this range, the reuse of materials is not guaranteed because they may not give sufficient final results.

The invention can also comprise any of the following features taken individually or in any technically possible combination:

- the laminated material having a total melt flow index between 0.5 and 1.2 g/10 min at 190°C and 2.16 kg according to the ASTM D1238 measurement,
- the laminated material having a total melt flow index between 1 and 1.2 g/10 min at 190°C and 2.16 kg according to the ASTM D1238 measurement,
- the flexible tube container is recyclable,
- the flexible tube container has a total melt flow index between 0.2 and 1.61 g/10 min at 190°C and 2.16 kg according to the ASTM D1238 measurement,
- the tube head has a total melt flow index between 1.5 and 10 g/10 min at 190°C and 2.16 kg according to the ASTM D1238 measurement,
- the carrier layer comprises PP,
- the carrier layer is made of PP,
- the carrier layer is made of oriented polypropylene (OPP),
- the carrier layer comprises PE,
- the carrier layer is made of PE,
- the carrier layer is made of oriented polyethylene (OPE),
- the laminated material has a density between 0.941 and 0.98 g/cm$^3$,
- the laminated material has a density between 0.941 and 0.965 g/cm$^3$,
- the laminated material comprises at least 55% by weight of HDPE,
- the inner layer has a higher melt flow index (MFI) than the MFI of the carrier layer,
- the inner layer has a MFI at least equal to 4 g/10 min at 230°C and 2.16 kg according to the ASTM D1238 measurement,
- the inner layer has a MFI between 8 and 12 g/10 min at 230°C and 2.16 kg according to the ASTM D1238 measurement, preferably of 10 g/10 min at 230°C and 2.16 kg according to the ASTM D1238 measurement

- the carrier layer has a MFI between 0.5 and 5 g/10 min at 230°C and 2.16 kg according to the ASTM D1238 measurement,
- the carrier layer has a MFI between 0.8 and 2 g/10 min at 230°C and 2.16 kg according to the ASTM D1238 measurement, preferably of 1 g/10 min at 230°C and 2.16 kg according to the ASTM D1238 measurement
- the outer layer has a MFI at least equal to 5 g/10 min at 230°C and 2.16 kg according to the ASTM D1238 measurement,
- the outer layer has a MFI between 5 and 10 g/10 min at 230°C and 2.16 kg according to the ASTM D1238 measurement, preferably of 7 g/10 min at 230°C and 2.16 kg according to the ASTM D1238 measurement
- the laminated material comprises an adhesive layer between the barrier layer and the inner layer and/or between the barrier layer and the outer layer,
- the adhesive layer is a anhydride modified ethylene acrylate resin,
- the laminated material comprises at least one intermediate layer,
- the total thickness of the laminated material is between 150 and 300 μm,
- the total thickness of the laminated material is between 200 and 250 μm,
- the thickness of the inner layer is between 50 and 120 μm,
- the thickness of the outer layer is comprised between 80 and 150 μm,
- the thickness of the carrier layer is between 10 μm and 30 μm,
- the AlOx material barrier is oriented toward the inner layer,
- the AlOx material barrier is oriented toward the outer layer,
- the laminated material has a substantially symmetrical layering structure from either side of said barrier layer,
- the flexible tube skirt comprises an overlap side seam made of a first side edge of the laminated material covering a second side edge of the laminated material.

The invention will be better understood thanks to the following description which is only indicative and which is not intended to limit said invention, accompanied with the following figures:

Figure 1 is a schematic representation of a flexible tube container according to an embodiment of the present invention
Figure 2 is a sectional view of part of figure 1
Figure 3 is a schematic representation of a flexible tube container according to a second embodiment of the present invention,
Figure 4 is a schematic representation of a flexible tube container according to another embodiment of the present invention,
Figure 5 is a sectional view of part of figure 4,
Figure 6 is a schematic diagram of the layers that form the laminate according to a first embodiment of the present invention.

In the context of the invention, the following definitions and abbreviations are used.
As used herein, the terms "outer", "inner", "upper" and "lower", and the like, used with respect to the various layers refer to the laminated material with the intended outer or upper surface uppermost and the intended inner or lower (product-contacting) surface lowermost. In addition, these terms and the terms "over", "under" or "on" do not imply that the layers are necessarily directly in contact. For example, the upper layer being "formed on" the barrier layer does not preclude the presence of one or more other intervening layers located between the upper layer and the barrier layer. Furthermore, layers may be provided under the inner layer, i.e. between the inner layer and the product, or above the outer layer (like decorative layers).
The term "container" is used herein to refer to an item which may contain a product. Such products are usually liquids, gels or pastes. Preferred containers include tubes and pouches. The container may further comprise a lid or a cap and, if necessary, attachment means for the lid or cap (such as a tube head or shoulder) before it forms a useful commercial container. As a consequence, the laminated material of the invention can form a tube skirt, an insert of a tube head or a combination thereof.
The term "flexible" as used herein describes a laminate or a container made thereof which can bend or be bent easily and which does not break (unless it is bent too much). Herein in connection with the containers the term flexible indicates that if the container is subjected to a force, for example, by being filled with a liquid, or by applying pressure with a finger or a hand, it will change its form without breaking. A flexible container can also be considered to be a "squeezable" container.
The term "adhesive layer" refers to a layer which is placed between two layers with the object of ensuring that the two layers are joined together.
"AlOx" means aluminum oxide which is to say a material containing aluminum, oxygen, and optionally other elements, in which x, the ratio of oxygen to aluminum atoms, is from about 0.1 to about 2. These alternative values of x apply to any use of the term AlOx in this specification to define a composite barrier coating or layer.
The term "polymer" refers to a large molecule, or macromolecule, composed of many repeated subunits.
The term "polyolefin" refers to any of a class of polymers produced from a simple olefin as a monomer.
The term "PP" refers to polypropylene.
The term "OPP" refers to oriented polypropylene.

The term "PE" refers to polyethylene.

The term "HDPE" refers to high density polyethylene.

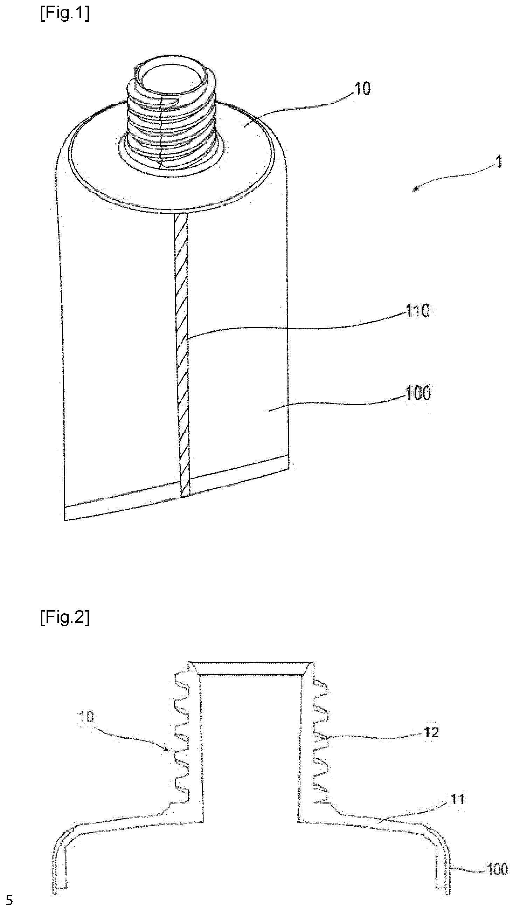

As illustrated in Fig. 1 to 5, the invention relates to a flexible tube container 1 comprising a tube head 10 and a skirt 100.

Said tube skirt 100 is formed by rolling a sheet of a recyclable laminated material 200.

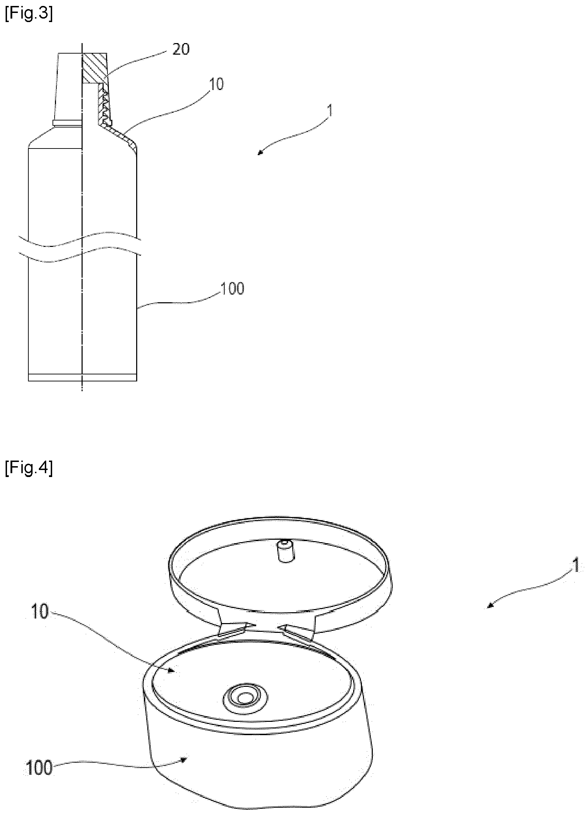

Advantageously, as represented at figure 3, the flexible tube container 1 can also comprise a cap 20.

The tube head 10 comprises a wall with a distribution opening and is attached or linked to the tube skirt 100. According to an embodiment illustrated in figures 1 to 3, the head 10 can comprise a shoulder 11 and a neck 12. The neck advantageously comprises thread. The cap can be screwed on the neck in order to block the distribution opening.

According to another embodiment not illustrated, the cap can be snapped on the neck, the neck comprising snap function such as an annular rib cooperating with flanges or tabs of the cap.

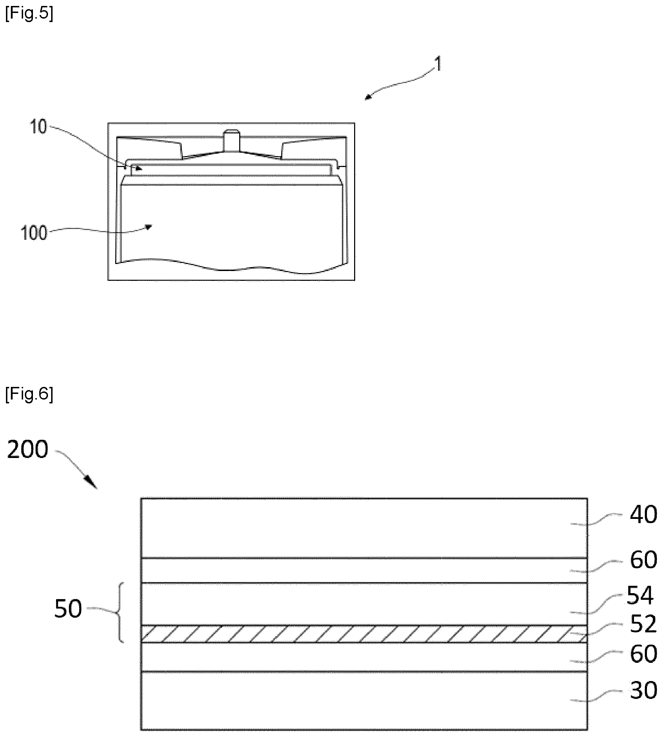

According to yet another embodiment represented at figure 4 and 5, the tube can comprise a head 10 with no neck. In this configuration, the head comprises only the wall with a distribution opening, this wall being attached directly to the skirt. This shoulderless configuration allows to reduce the quantity of material used to form the head.

According to an embodiment, the tube 1 can also comprise an insert located inside the container and attached to the internal surface of the tube head. In this case, the cap advantageously comprise a punch configured to pierce or cut the insert during the first use of the container. More advantageously, the container according to this embodiment comprises a ring mounted on the head. Said ring allows to maintain the cap in a first position, called waiting position, in which the pinch is kept at distance from the insert.

As illustrated in figure 1, the skirt 100 comprises a longitudinal weld or join 110. Advantageously, this longitudinal weld 110 is obtained by overlapping the edges of the laminated material 200 forming the skirt 100. More particularly, portions of the laminate are folded onto each other in a tubular configuration such that a first side edge of the laminate covers a second side edge of the laminate. Then, an upper surface of the laminate is in facing contact with a lower surface of the laminate. An overlap side seam is formed by means of heating the laminate such that the upper surface of the laminate is bonded to the lower surface of the laminate. The overlap side seam forms the longitudinal weld 110. Said longitudinal weld 110 can be visible from the outside of the tube container 1. According to another embodiment, the longitudinal weld 110 is non visible.

As represented in figures 2 and 3, said flexible tube skirt 100 is intended to be fixed to the tube head 10 in order to form the flexible tube container 1. The tube head 10 is advantageously overmoulded on the skirt 100. The skirt 100 is advantageously fixed to the shoulder periphery. Said tube head 10 is advantageously made of PE but can be made in any other suitable material such as PP (polypropylene). The tube head can be produced as a separate piece of plastic and then attached to the skirt by heating the edge of the shoulder and the edge of the skirt and compress them together.

Embodiments of the structures of the recyclable laminated material 200 according to the invention are illustrated at figure 6.

The recyclable laminated material 200 comprises an inner layer 30 made of PE, an outer layer 40 made of PE and an barrier layer 50 comprising an aluminum oxide (AlOx) material barrier 52 and a carrier layer 54 made of polyolefin coated by said oxide material barrier 52. According to the invention, the laminated material 200 has a total melt flow index between 0.5 and 1.6 g/10 min at 190°C and 2.16 kg according to the ASTM D1238 measurement, preferably between 0.5 and 1.2 g/10 min at 190°C and 2.16 kg according to the ASTM D1238 measurement, more preferably between 1 and 1.2 g/10 min at 190°C and 2.16 kg according to the ASTM D1238 measurement.

Advantageously, the flexible tube container 1 has a total melt flow index comprised between 0.2 and 1.61 g/10 min at 190°C and 2.16 kg according to the ASTM D1238 measurement.

Preferably, the tube head has a total melt flow index between 1.5 and 10 g/10 min at 190°C and 2.16 kg according to the ASTM D1238 measurement.

The Melt Flow Index (MFI) or melt flow rate (MFR) is a measure of the ease of flow of the melt of a thermoplastic polymer. It is defined as the mass of polymer, in grams, flowing in ten minutes through a capillary of a specific diameter and length by a pressure applied via prescribed alternative gravimetric weights for alternative prescribed temperatures. The method is described in the similar standards ASTM D1238 and ISO 1133. Here, the sample has been tested at 190°C and 2.16 kg.

The melt flow index of the laminated material 200 or of the flexible tube container 1 can be measured from a melt blended material obtained by granulation and melt extrusion of the different parts.

The melt flow index can also be calculated by using the following formula:

$$log(MI_{blend}) = \sum w_i log(MI_i).$$

Such a Melt flow index makes it possible to ensure that the laminated material 200, and more advantageously the flexible tube container 1, will be able to be remelted into a material which can be reused, in other words it makes it possible to ensure that the laminated material 200, and more advantageously the flexible tube container 1 are recyclable.

Indeed, for melt flow index values outside this range, the reuse of materials is not guaranteed because they may not give sufficient final results.

Advantageously, the laminated material 200 has a density between 0.941 and 0.98 g/cm$^3$, preferably between 0.941 and 0.965 g/cm$^3$.

More advantageously, the laminated material 200 comprises at least 55% by weight of HDPE.

This improves the recyclability of the laminated material 200 and therefore the recyclability of the flexible tube container 1.

Aluminum Oxide material barriers are particularly interesting in recyclable laminated materials as they have good barrier properties while having a very low thickness and thus represent a small amount of the laminated material 200. Indeed, the carrier layer 54 represents most of the thickness of the barrier layer 50 as the aluminum oxide material is advantageously a thin layer coated on the carrier layer 54. This small amount of aluminum oxide material has no impact on the recycling stream and thus the laminated material 200 and the flexible tube container 1 can be recycled as a whole, with the barrier layer 50.

Preferably, the barrier layer 50 comprising said carrier layer 54 and said aluminum oxide material 52 coating has a thickness between 10 and 30 $\mu$m. More preferably, the barrier layer 50 has a thickness between 15 and 20 $\mu$m. Advantageously, a thin inorganic layer of aluminum oxide is evaporated in a vacuum environment to a carrier layer 54 substrate.

Advantageously, the coating of aluminum oxide material 52 has a thickness less than 0.1$\mu$m.

According to the invention, the carrier layer 54 is made of polyolefin. Advantageously, the polyolefin is PP and/or PE.

A carrier layer 54 comprising PE, and more advantageously made of PE, improves the recyclability of the laminated material 200 and therefore the recyclability of the flexible tube container 1.

Advantageously, the carrier layer 54 is an oriented polyethylene (OPE).

However, a carrier layer 54 comprising PP or made of PP can also be used without impacting the recyclability of the laminated material 200 or the of the flexible tube container 1. Indeed, only the carrier layer 54 comprises a material which is potentially not in PE, and is limited within the laminated material 200, which is advantageous for the recyclability.

The use of a carrier layer 54 made of PP combined with inner and outer layers 30, 40 in PE improve also the permeability properties of the laminated material 200, especially compared to a laminate with inner and outer layers also in PP. Advantageously, the carrier layer 54 is an oriented PP (OPP) or oriented polyethylene (OPE).

As illustrated in Fig. 6, the barrier layer 50 is located between the inner layer 30 and the outer layer 40.

Said inner layer 30 can be composed by a plurality of single layers. In the same way, said outer layer 40 can be composed by a plurality of single layers. The number of single layers composing the inner layer 30 and the outer layer 40 is not limited to the example illustrated in the figure 6.

The different single layers can be cast type films or blown type film.

The different layers are joined together by lamination process in order to obtain the laminated material 200 according to the invention. Said laminated material 200 can be obtained by different lamination process, as extrusion lamination process or adhesive lamination process.

Preferably, the inner layer 30 has a MFI higher than the MFI of the carrier layer 50. In such case, in particular when forming the side seam, the inner layer 30 will better flow than the carrier layer 54. Thus, the sealing is improved especially in the overlapping region when forming the tube skirt from this laminated material 200. The delamination issues are especially reduced.

Advantageously, the inner layer 30 has a MFI at least equal to 4 g/10 min at 230°C and 2.16 kg according to the ASTM D1238 measurement. More advantageously, the inner layer 30 has a MFI comprised between 8 and 12 g/10 min at 230°C and 2.16 kg according to the ASTM D1238 measurement, preferably of 10 g/10 min at 230°C and 2.16 kg according to the ASTM D1238 measurement. An inner layer 30 having such MFI presents a good ability to flow. Thus, the covering of the edges of the aluminum oxide material barrier 52 is ensured and the sealing of the side seam is improved.

Preferably, the carrier layer 54 has a MFI comprised between 0.5 and 5 g/10 min at 230°C and 2.16 kg according to the ASTM D1238 measurement. More advantageously, the carrier layer 54 has a MFI comprised between 0.8 and 2 g/10 min at 230°C and 2.16 kg according to the ASTM D1238 measurement, preferably of 1 g/10 min at 230°C and 2.16 kg according to the ASTM D1238 measurement. This limits the movement of the carrier layer 54, protects the aluminum oxide material barrier 52 and thus ensures a sustainable barrier layer 50.

Advantageously, the outer layer 40 has a MFI at least equal to 5 g/10 min at 230°C and 2.16 kg according to the ASTM D1238 measurement. More advantageously, the outer layer 40 has a MFI comprised between 5 and 10 g/10 min at 230°C and 2.16 kg according to the ASTM D1238 measurement, preferably of 7 g/10 min at 230°C and 2.16 kg according to the ASTM D1238 measurement.

More advantageously, the carrier layer 54 is made of oriented polypropylene (OPP). The type of PP used to form OPP layer is particularly advantageous for forming the carrier layer 54 as it presents a sensibly low melt flow index and thus a low ability to flow. As exposed above, when the carrier layer 54 has a sensibly low melt flow index the aluminum oxide material barrier 52 stays stable, the cut edge is protected and the sealing is improved especially in the overlapping region. Furthermore, OPP presents a high resistance to heat and protecting the barrier coating during the lamination process.

Preferably, the laminated material 200 comprises an adhesive layer 60 between the barrier layer 50 and the inner layer 30 and/or between the barrier layer 50 and the outer layer 40. Said adhesive layer 60 is used to connect the inner layer 30 and barrier layer 50 as well as the outer layer 40 and the barrier layer 50 and to prevent any delamination problems.

Advantageously, the adhesive layer 60 is an anhydride modified ethylene acrylate resin.

Advantageously, the laminated material comprises at least one intermediate layer 40. This intermediate layer 40 can be located between the inner layer 30 and the barrier layer 50 and/or between the outer layer 40 and the barrier layer 50.

The total thickness of the laminated material 200 is an important feature as it will influence its mechanical properties.

Advantageously, the total thickness of the laminated material 200 is between 150 and 300 $\mu$m. More advantageously, the total thickness of the laminated material 200 is between 200 and 250 $\mu$m. Such thickness is well adapted for forming flexible tube, in particular toothpaste tube.

Another feature that can influence the ability of the different layers to flow is the respective thickness of the different layers. In order to flow, the inner layer 30 require a minimum thickness. If the inner layer 30 is too thin, not enough material will be "available" to flow and the covering of the cut edges of the oxide material barrier 52 will not be achieved.

The thickness of the inner layer 30 also influences the absorption of some products that will be contained in the flexible tube container 1. Some part of the product that will be contained in the flexible tube container 1, for example the flavors, can be absorbed by the layers placed between the product and the barrier 52, here the inner layer 30. If the inner layer 30 is too thick, the retention rate will be too high and might lead to a deterioration of said inner layer 30. Thus, there is a need for a compromise between retention rate requiring a low thickness and appropriate flow requiring a high thickness.

Advantageously, the thickness of the inner layer (30) is between 50 and 120 $\mu$m. Advantageously, the thickness of the outer layer is comprised between 80 and 150 $\mu$m.

Advantageously, the thickness of the carrier layer is comprised between 10 $\mu$m and 30 $\mu$m.

It has to be noticed that the figure 6 is schematic representation and that the layers are not at scale.

In order to further limit the absorption rate of the laminated material 200, the aluminum oxide material barrier 52 can be carried by carrier layer 54 on its side facing the inner layer 30. In other words, the aluminum oxide barrier 52 of the barrier layer 50 is oriented toward the inner layer 30. This configuration of the barrier layer 50 allows stopping the migration of part of the product that will be contained in the flexible tube container 1 before it reaches the carrier layer 54 and thus it reduces the absorption rate.

In another embodiment not illustrated, aluminum oxide barrier is oriented toward the outer layer 40.

Advantageously, the laminated material 200 having a substantially symmetrical layering structure from either side of said barrier layer 50. The symmetry of the laminated material 200 can influence some physical properties of the laminated material 200. In particular, the symmetry improves the roundness of the skirt 200 made thereby. The roundness of the tube allows increasing production rates when forming and filling tubes.

The following structures are exemplary embodiments of laminated material 200 according to the present invention. The invention is not restricted to the specific laminated material 200 of the exemplary embodiments but encompasses other laminated material structures falling within the scope of the appended claims. The different layers of these exemplary embodiments of laminated material 200 are described starting from the external layer, i.e. the intended outer surface uppermost, to the internal layer, i.e. the intended inner (product-contacting) surface lowermost.

Embodiment 1:

This embodiment is schematically represented at figure 6. Said embodiment is constituted of:

- an outer layer 40 made of PE,
- a first adhesive layer 60,
- a carrier layer 54 made of OPP,
- an aluminum oxide material barrier 52,
- a second adhesive layer 60,
- an inner layer 30 made of PE.

The laminated material 200 is obtained from these different layers by adhesive lamination. The outer layer 40 has a thickness of 152 $\mu$m. The carrier layer 54 and the aluminum oxide material barrier 52 represent the barrier layer 50. The AlOx barrier 52 has a thickness less than 0.1 $\mu$m. Said barrier layer has a thickness of 16 $\mu$m. The inner layer 30 has a thickness of 81 $\mu$m. The laminated material 200 has a total thickness of 249 $\mu$m.

The laminated material 200 has a total melt flow index of 1.28 g/10 min at 190°C and 2.16 kg according to the ASTM D1238 measurement and a density of 0.96 g/cm$^3$.

Embodiment 2:

This embodiment is schematically represented at Fig 6. Said embodiment is constituted of:

- an outer layer 40 made of PE,
- a first adhesive layer 60,
- a carrier layer 54 made of OPP,

- an aluminum oxide material barrier 52,
- a second adhesive layer 60,
- an inner layer 30 made of PE.

The laminated material 200 is obtained from these different layers by adhesive lamination. The outer layer 40 has a thickness of 107 $\mu$m. The carrier layer 54 and the aluminum oxide material barrier 52 represent the barrier layer 50. The AlOx barrier 52 has a thickness less than 0.1 $\mu$m. Said barrier layer has a thickness of 16 $\mu$m. The inner layer 30 has a thickness of 106 $\mu$m. The laminated material 200 has a total thickness of 250 $\mu$m.

The laminated material 200 has a total melt flow index of 1.59 g/10 min at 190°C and 2.16 kg according to the ASTM D1238 measurement and a density of 0.95 g/cm$^3$.

Embodiment 3:

This embodiment is schematically represented at Fig 6. Said embodiment is constituted of:

- an outer layer 40 made of PE,
- a first adhesive layer 60,
- a carrier layer 54 made of OPP,
- an aluminum oxide material barrier 52,
- a second adhesive layer 60,
- an inner layer 30 made of PE.

The laminated material 200 is obtained from these different layers by adhesive lamination. The outer layer 40 has a thickness of 107 $\mu$m. The carrier layer 54 and the aluminum oxide material barrier 52 represent the barrier layer 50. The AlOx barrier 52 has a thickness less than 0.1 $\mu$m. Said barrier layer has a thickness of 16 $\mu$m. The inner layer 30 has a thickness of 106 $\mu$m. The laminated material 200 has a total thickness of 250 $\mu$m.

The laminated material 200 has a total melt flow index of 1.59 g/10 min at 190°C and 2.16 kg according to the ASTM D1238 measurement and a density of 0.95 g/cm$^3$.

As illustrated in Fig. 3, the tube skirt 100 is formed by rolling a sheet, especially a flat sheet, of a laminated material 200 as described above. More particularly, portions of the sheet are folded onto each other in a tubular configuration such that a first side edge of the sheet covers a second side edge of the sheet. Then, an upper surface of the outer layer 40 is in facing contact with a lower surface of the inner layer 30. An overlap side seam 110 is formed by means of heating the sheet such that the upper surface of the outer layer 40 is bonded to the lower surface of the inner layer 30.

As the inner layer 30 has a good ability to flow, when the side seam 110 is formed, the inner layer 30 flows and cover the cut edge of the oxide material barrier 52. Thus, the cut edge is protected from the product that will be contained by the tube and the sealing is improved especially in the overlapping region 110. Furthermore, as the carrier layer 54 does not flow, or at least not much, when the side seam 110 is formed, the aluminum oxide material barrier 52 stays stable and a sustainable protection is ensured. Thus, the sealing of the tube skirt 100 is improved and the time life of a product contained in the flexible tube container 1 comprising said laminated material 200 is extended.

**Claims**

1. A flexible tube container (1) comprising a tube head (10) and a skirt (100) formed from a laminated material (200), the laminated material (200) comprising an inner layer (30) made of PE, an outer layer (40) made of PE and an barrier layer (50) comprising an aluminum oxide (AlOx) material barrier (52) and a carrier layer (54) made of polyolefin coated by said oxide material barrier (52), the laminated material (200) having a total melt flow index between 0.5 and 1.6 g/10 min at 190°C and 2.16 kg according to the ASTM D1238 measurement.

2. A flexible tube container (1) according to claim 1, wherein the flexible tube container (1) is recyclable.

3. A flexible tube container (1) according to any of the preceding claims, wherein the flexible tube container (1) has a total melt flow index comprised between 0.2 and 1.61 g/10 min at 190°C and 2.16 kg according to the ASTM D1238 measurement.

4. A flexible tube container (1) according to any of the preceding claims, wherein the carrier layer (54) comprises PP.

5. A flexible tube container (1) according to any of the claims 1 to 3, wherein the carrier layer (54) comprises PE.

6. A flexible tube container (1) according to any of the preceding claims, wherein the laminated material (200) has a density between 0.941 and 0.98 g/cm$^3$.

7. A flexible tube container (1) according to any of the preceding claims, wherein the laminated material (200) comprises at least 55% by weight of HDPE.

8. A flexible tube container (1) according to any of the preceding claims, comprising an adhesive layer (60) between the barrier layer (50) and the inner layer (30) and/or between the barrier layer (50) and the outer layer (40).

9. A flexible tube container (1) according to the precedent claim, wherein the adhesive layer (60) is an anhydride modified ethylene acrylate resin.

**10.** A flexible tube container (1) according to any of the preceding claims, wherein the total thickness of the laminated material (200) is between 150 and 300 μm.

**11.** A flexible tube container (1) according to any of the preceding claims, wherein the aluminum oxide material barrier (52) is oriented toward the inner layer (30).

**12.** A flexible tube container (1) according to any of the preceding claims, wherein said laminated material (200) has a substantially symmetrical layering structure from either side of said barrier layer (50).

**13.** A flexible tube container (1) according to any of the preceding claims, comprising an overlap side seam (110) made of a first side edge of the laminated material (100) covering a second side edge of the laminated material (100).

[Fig.1]

[Fig.2]

[Fig.3]

[Fig.4]

[Fig.5]

[Fig.6]

Europäisches
Patentamt

European
Patent Office

Office européen
des brevets

**EUROPEAN SEARCH REPORT**

Application Number

EP 23 15 3338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/032590 A1 (KERN PHILIPPE [CH] ET AL) 3 February 2022 (2022-02-03) <br> * paragraph [0002] * <br> * paragraph [0026] - paragraph [0027] * <br> * paragraph [0045] * <br> * paragraph [0060] * <br> * paragraph [0067] * <br> * paragraph [0086] * <br> * figures 1,4 * <br> * claims 1,6 * <br> * table 2 * | 1-13 | INV. <br> B32B27/08 <br> B32B1/08 <br> B32B7/12 <br> B32B27/32 <br> B65D65/40 |
| X | WO 2022/216239 A1 (KIM PACK CO LTD [TH]) 13 October 2022 (2022-10-13) <br> * page 5, line 12 - line 29 * <br> * page 9, line 10 - line 11 * <br> * page 9, line 24 - line 25 * <br> * page 11, line 8 - line 10 * <br> * claim 1 * | 1-13 | |
| A | WO 2020/193562 A1 (ALBEA SERVICES [FR]) 1 October 2020 (2020-10-01) <br> * page 5, line 32 - line 36 * <br> * figure 1 * | 1-13 | TECHNICAL FIELDS SEARCHED (IPC) <br><br> B32B <br> B65D |

The present search report has been drawn up for all claims

| Place of search | Date of completion of the search | Examiner |
|---|---|---|
| The Hague | 12 June 2023 | Sanchez Perucha, A |

## ANNEX TO THE EUROPEAN SEARCH REPORT
## ON EUROPEAN PATENT APPLICATION NO.

**EP 23 15 3338**

This annex lists the patent family members relating to the patent documents cited in the above-mentioned European search report.
The members are as contained in the European Patent Office EDP file on
The European Patent Office is in no way liable for these particulars which are merely given for the purpose of information.

**12-06-2023**

| Patent document cited in search report | | Publication date | Patent family member(s) | | Publication date |
|---|---|---|---|---|---|
| US 2022032590 | A1 | 03-02-2022 | CA | 3091114 A1 | 27-02-2021 |
| | | | EP | 3785895 A1 | 03-03-2021 |
| | | | ES | 2925568 T3 | 18-10-2022 |
| | | | HU | E060244 T2 | 28-02-2023 |
| | | | PL | 3785895 T3 | 31-10-2022 |
| | | | US | 2022032590 A1 | 03-02-2022 |
| | | | WO | 2021037347 A1 | 04-03-2021 |
| WO 2022216239 | A1 | 13-10-2022 | NONE | | |
| WO 2020193562 | A1 | 01-10-2020 | CN | 113748016 A | 03-12-2021 |
| | | | EP | 3715105 A1 | 30-09-2020 |
| | | | US | 2022212453 A1 | 07-07-2022 |
| | | | WO | 2020193562 A1 | 01-10-2020 |

EPO FORM P0459

For more details about this annex : see Official Journal of the European Patent Office, No. 12/82